# EUROPEAN PATENT APPLICATION

(11) **EP 4 471 299 A1**
(43) Date of publication of application: **04.12.2024**
(21) Application number: 23382525.6
(22) Date of filing: 31.05.2023
(51) Int. Cl.: F16H 61/32, H02K 7/116

(54) **MECHANICAL TRANSMISSION ACTUATOR FOR A VEHICLE, DETECTION SYSTEM FOR A MECHANICAL TRANSMISSION AND SENSOR DRIVING MEANS**

(71) Applicant: Fico Triad, S.A., 08028 Barcelona (ES)
(72) Inventor: Moreno Colom, Javier, E08232 Viladecavalls (Barcelona) (ES)

(57) **Abstract**

The present mechanical transmission actuator for a vehicle comprises an electric motor (20) configured to rotate a rotor shaft, an output shaft (30) configured to connect to an external shaft, a reduction gear, and a detection system (100). The output shaft is connected to the detection system and further configured to transmit a converted torque from the reduction gear to the external shaft. The detection system is configured to determine a position of the output shaft. The mechanical transmission actuator comprises a sensor driving means, a printed circuit board (PCB), and a first sensor position coupled to the printed circuit board (PCB) and connected to the sensor driving means for sensing a position of the sensor driving means. The sensor driving means comprises a first part (51), a second part (52), and a biasing means (53) configured to push the second part and the first part together. This first part comprises a first gear means (511), and a portion adapted for interacting to a first sensor position, wherein the first gear means is configured to connect to the output shaft. The second part comprises a second gear means (521) configured to connect to the output shaft. In use, the first gear means abuts a first tooth surface of the output shaft and the second gear means abuts a second tooth surface of the output shaft.

## Description

The present disclosure relates to a mechanical transmission actuator for a vehicle. Said mechanical transmission actuator may be a gearbox actuator for vehicle transmissions. Further, it relates to a detection system for determining a position of a part of a mechanical transmission such as a mechanical transmission actuator. The present disclosure further relates to a sensor driving means for a detection system.

### BACKGROUND

A gearbox is a type of vehicle transmission configured to transfer the power produced by an engine to the drive wheels of the vehicle. A gearbox enables adjusting the gear ratio between the wheels and the engine as the vehicle slows down or speeds up. A driver of a vehicle can use a shifter device to change gears i.e. change the gear ratio between an input gear connected to the engine side and an output gear connected to the wheels side.

A gearbox actuator is known in the art for remotely actuating a gearbox in a motor vehicle automatic transmission such as of the shift-by-wire type. In shift-by-wire type vehicle transmissions, a shift signal from a user of a vehicle is translated into a rotation of a transmission shift shaft for changing a transmission mode. Known transmission modes in a vehicle automatic transmission are, for example, park mode, no park mode, reverse mode, neutral mode, and drive mode. Any other transmission mode is of course possible.

Known gearbox actuators use an electric motor for actuating the vehicle automatic transmission gearbox via a gear train. Gearbox actuators of the prior art fail to accurately determine the position of a part of the gearbox actuator such as a gearbox shaft (referred to as external shaft in the present disclosure). Also, known detection systems for vehicle gearbox actuators are complicated and not compact.

Further, one of the difficulties encountered in such actuators is that not all of the transmission modes require the same physical parameters. For example, some transmission modes require higher amounts of torque than others. Such prior art actuators still require large diameter rotating parts for the purpose of providing the required torque for changing between different transmission modes. There is thus a need for a gearbox actuator capable of providing suitable torque values for changing between transmission modes while the actuator overall dimensions are reduced.

### SUMMARY

It is an object of the present invention to provide a mechanical transmission actuator that comprises:
- a motor configured to produce a generated torque using electric current applied thereto;
- a rotor shaft moved by the generated torque; and
- an output shaft configured to connect to an external shaft.

The external shaft may not necessarily be part of the present mechanical transmission actuator. In fact, it may be preferred that the external shaft may be a gearbox shaft. Preferably, said external shaft may be, in use, mechanically connected to or more specifically attached to the output shaft. The output shaft may be thus adapted for driving the external shaft.

As stated below, the present mechanical transmission actuator may be for a vehicle, e.g. a vehicle mechanical transmission actuator such as a vehicle gearbox actuator.

The motor may be an electric motor. It may comprise a rotor and a stator.

The rotor shaft and the output shaft may be directly or indirectly connected such that, in use, the rotor shaft may cause the movement, e.g. rotation, and transmit torque to the output shaft.

The mechanical transmission actuator may further comprise a detection system.

The detection system may comprise:
- a sensor driving means;
- a printed circuit board (PCB); and
- a first sensor position coupled to the printed circuit board (PCB).

The first sensor position may be connected to the sensor driving means for sensing a position of the sensor driving means. The position of the sensor driving means may be thus determined by the detection system. Preferably, the sensor driving means may comprise a portion adapted for interacting to the first sensor position. It is preferred said portion may be a first end. This is, the first end of the sensor driving means and the first sensor position are connected to each other. More preferably, the first sensor position may be configured to sense a rotational position of the sensor driving means.

The sensor driving means may be connected to the output shaft. The output shaft may cause the movement, e.g. rotation, of the sensor driving means or at least a part thereof.

Preferably, the mechanical transmission actuator may further comprise a reduction gear configured to receive the generated torque of the motor, convert the generated torque, and transmit the converted torque to the output shaft. The converted torque may be greater than the generated torque of the motor, e.g. an increased torque. Thus, the reduction gear may be particularly configured to reduce the speed of the rotor shaft while multiplying the generated torque.

The output shaft may be part of or connected to the reduction gear. Further, the output shaft may be connected to the sensor driving means and to the external shaft. The output shaft may be configured to receive the converted torque of the reduction gear and transmit it to the external shaft. Further, as stated above, the output shaft may be configured to cause the movement, e.g. rotation, of the sensor driving means or at least a part thereof.

Preferably, the reduction gear may comprise a cycloidal disc which transmits mechanical power to the output shaft. The reduction gear will be explained in more detail further below.

As explained, the output shaft and the sensor driving means are connected to each other, preferably, directly connected to each other. More preferably, the sensor driving means may comprise a first gear means, wherein the output shaft may comprise a gear means. The first gear means of the sensor driving means and the gear means of the output shaft may be configured to engage to each other. The first gear means may extend at least partially around the perimeter of a portion of the sensor driving means, wherein the gear means of the output shaft may extend at least around the perimeter of a portion of said output shaft. Both the first gear means of the sensor driving means and the gear means of the output shaft may comprise a plurality of teeth arranged at the perimeter thereof. It is even more preferred that the number of teeth of the gear means of the output shaft may be greater than the number of teeth of first gear means of the sensor driving means.

An advantage of the present invention may be to increase the detection range thanks to the detection ratio since an output shaft angle may be multiplied by the gearing ratio. Detection may be thus more accurate as it will be explained below.

Preferably, the detection system may further comprise a second sensor position coupled to the printed circuit board (PCB) and connected to the rotor shaft for sensing a position of said rotor shaft. The position of the rotor shaft may be thus determined by the detection system. This is, a single printed circuit board (PCB) may comprise the first and the second sensor for sensing the position of the sensor driving means, or at least a portion thereof, and the position of the rotor shaft respectively. It may be particularly useful for determining the position of the sensor driving means, or at least a portion thereof, and the position of the rotor shaft respectively. The detection system may thus determine a position of the output shaft based on the sensed position value of the sensor driving means obtained by the first sensor position.

A control unit (ECU) such as an electronic control unit may be further provided. The control unit (ECU) may be part of or connected to the mechanical transmission actuator. The detection system may thus comprise the control unit (ECU). Preferably, the control unit (ECU) may be arranged on the printed circuit board (PCB). This is, the printed circuit board (PCB) may preferably comprise an electronics carrier for coupling the first sensor position, the second sensor position and the control unit (ECU). Further, the sensed position value of the rotor shaft by the second sensor position and the sensed position value of the sensor driving means by the first sensor position may be different. The control unit (ECU) may be configured to receive information on the sensed position of the sensor driving means from the first sensor position and preferably on the sensed position of the rotor shaft from the second sensor position. More preferably, the control unit (ECU) may be configured to receive information on a rotational position of the sensor driving means from the first sensor position and, more preferably, on a rotational position of the rotor shaft from the second sensor position. In this way the control unit (ECU) may properly control the mechanical transmission actuator. This is, the control unit (ECU) may be configured to determine the position of the output shaft based on the sensed position of the sensor driving means obtained by the first sensor position. The control unit (ECU) may be further configured to determine the position of the rotor shaft based on the sensed position of the rotor shaft obtained by the second sensor position. The control unit (ECU) may thus operate the motor based on sensing data of the first and the second sensor position. The second sensor position may be useful for the control unit (ECU) to determine the position of the rotor in relation to the stator. In this way the control unit (ECU) may determine when electric current has to be supplied to each phase of the motor.

Preferably, the control unit (ECU) may be configured to use pre-trained reference data to determine the position of the output shaft. Said pre-trained reference data is a pre-known information for determining the initial position of the output shaft for the first sensor position and optionally also for the second sensor position. Preferably, the control unit (ECU) may be configured to check the initial position and a current position of a shift stage, preferably, when the output shaft and the sensor driving means are engaged, for controlling the operation of the motor. The current position may be from an instant of time after the initial position.

Preferably, at least a portion of the rotor may be arranged between the sensor driving means and the rotor shaft. Also, the sensor driving means may define a sensor driving means axis (AX1). Said sensor driving means axis (AX1) may be the axis of rotation of the sensor driving means or at least a portion thereof. More preferably, the sensor driving means axis (AX1) may be the axis of rotation of at least the first gear means of the sensor driving means. The sensor driving means axis (AX1) may be arranged substantially perpendicular to the printed circuit board (PCB). Further, the output shaft may define an output shaft axis (AX2) which may be the axis of rotation of the output shaft or at least a portion thereof. In use, the sensor driving means axis (AX1) and the output shaft axis (AX2) may not be aligned to each other. This is, the sensor driving means axis (AX1) and the output shaft axis (AX2) may be misaligned. More preferably, the sensor driving means axis (AX1) and the output shaft axis (AX2) may be arranged substantially parallel to each other.

It is preferred that the rotor shaft may define a rotor shaft axis (AX3). The rotor shaft axis (AX3) may be the axis of rotation of the rotor shaft. More preferably, the rotor shaft axis (AX3) and the output shaft axis (AX2) may be aligned to each other. This is, the output shaft may not be provided with an eccentricity. Alternatively, it may be possible the rotor shaft axis (AX3) and the output shaft axis (AX2) may be arranged substantially parallel to each other.

It may be preferred the first sensor position and/or the second sensor position may be a non-contact sensor or a contact sensor. The sensor driving means and/or the rotor shaft may comprise a portion adapted for interacting to the first and/or the second sensor position. In use, said portion:
(i) may be at least partially arranged in the contact sensor; and/or
(ii) may comprise a magnet arranged to face the non-contact sensor.

The non-contact sensor may comprise a Hall sensor. Further, the contact sensor may comprise a potentiometer. It should be noted however that other contact sensors may also be used. For example, resistive tracks in electrical contact with brushes may also be used. A reliable, simple and robust detection may be performed with such contact sensors.

Preferably, the sensor driving means may comprise said portion adapted for interacting to the first sensor position. Further, the rotor shaft may comprise said portion adapted for interacting to the second sensor position. More preferably, said portion may be the first end. This is, when the first sensor position is a Hall sensor, the first end of the sensor driving means may be provided with a magnet arranged to face the Hall sensor. Also, when the second sensor position is a Hall sensor, the rotor shaft may comprise a first end provided with a magnet arranged to face the Hall sensor. In any case, the magnet may be an encoder magnet. When the first sensor position is a potentiometer, the first end of the sensor driving means may be at least partially arranged in the first sensor position.

A housing may be also provided in the present invention. The housing may be part of the mechanical transmission actuator and/or part of the present detection system. The housing of the mechanical transmission actuator may enclose the motor, and at least a portion of the rotor shaft and the output shaft. Also, said housing may enclose at least a portion of the sensor driving means. Further, the printed circuit board (PCB) may optionally be arranged within the housing. Preferably, the control unit (ECU) may also be arranged within the housing.

The present invention may provide different advantages that are summarized as follows:
- A more compact mechanical transmission actuator, e.g. gearbox actuator.
- It is not needed a hollow rotor shaft. It should be envisaged a hollow rotor shaft may cause the rotor shaft and the overall mechanical transmission actuator to disadvantageously increase in size. As consequence the cost may also increase. This is, the cost of the mechanical transmission actuator may be reduced by using the present non-hollow rotor shaft.
- The bearings of the present invention supporting the rotor shaft may be advantageously smaller.
- The motor may also be smaller in size.
- Increasing the detection range thanks to the detection ratio. Further, the above-mentioned output shaft angle may be multiplied by the gearing ratio. Also, detection is more accurate than in prior art solutions.
- Only one single PCB for both sensor position detectors.
- Multi-position. The output shaft can turn 360º and the detection system may still detect it.

The present mechanical transmission actuator may be arranged in a vehicle bodywork. It may be part of a mechanical transmission. Further, the mechanical transmission actuator may preferably be a gearbox actuator, e.g. a vehicle gearbox actuator. The gearbox actuator, in use, may be connected to the gearbox in a motor vehicle transmission through a connecting element, e.g. the above-mentioned external shaft. The external shaft may be the gearbox shaft. Said gearbox actuator may actuate a gearbox in a vehicle shift-by-wire transmission. Particularly, in a motor vehicle transmission to shift different gearshift positions (e.g. Park - no Park (P-nP), or P-R-N-D-X) by transforming electric energy via an electric motor into motion through the gearbox actuator to a vehicle gearbox when a request by a user is remotely sent by the vehicle shift-by-wire transmission.

It may be possible the present mechanical transmission actuator may be an actuator for 4x4 transfer gearbox, for example, attached to an output of the gearbox, e.g. an external shaft. Its function may be to direct power to both front and rear axles, in varying ratios depending on the vehicle manufacturer. Other applications of the present mechanical transmission actuator are of course not ruled out.

According to an aspect of the present invention, a sensor driving means may comprise:
- a first part comprising:
   (i) a first gear means configured to connect to a mechanical transmission means; and
   (ii) a portion adapted for interacting to a first sensor position;
- a second part comprising a second gear means configured to connect to the mechanical transmission means; and
- a biasing means configured to push the second part and the first part together, preferably, along the sensor driving means axis (AX1).

Preferably, the mechanical transmission means may comprise an output shaft. The output shaft may include the same features as the output shaft disclosed herein for the mechanical transmission actuator. The mechanical transmission means may further comprise the rotor shaft. More preferably, the mechanical transmission means may further comprise the above-mentioned reduction gear. The mechanical transmission means may optionally be connected to a second sensor position. The second sensor position may include the same features as the second sensor disclosed herein for the mechanical transmission actuator and the detection system. Preferably, the mechanical transmission means may be referred to as a second sensor driving means when its position may be sensed by the second sensor position. This is, the sensor driving means may be connected to the first sensor position and the mechanical transmission means, e.g. the second sensor driving means, may be connected to the second sensor position.

It is preferred that the above-mentioned portion of the first part of the sensor driving means may be a first end. Therefore, the first end of the first part of the sensor driving means may be configured to connect to the first sensor position. Further, a first end of the second sensor driving means may be configured to connect to the second sensor position.

It should be noted that the first sensor position may not necessarily be part of the present sensor driving means. In fact, it may be preferred that the first sensor position may be part of or attached to mechanical transmission actuator. More preferred, the first sensor position may be part of or attached to detection system as will be disclosed in more detail below.

In use, the above-mentioned first gear means may abut a first tooth surface of the mechanical transmission means. Further, the second gear means may abut a second tooth surface of the mechanical transmission means. Each of the first gear means and the second gear means may comprise a plurality of teeth. The plurality of teeth may preferably be arranged on the perimeter surface thereof.

The mechanical transmission means, e.g. the output shaft, may comprise a gear means preferably adapted for rotating the sensor driving means about the sensor driving means axis (AX1). The gear means may comprise a plurality of teeth defining thus a tooth space between two teeth. The plurality of teeth may preferably be arranged on the perimeter surface thereof.

Each gear tooth may have a top land, a bottom land and a flank. The top land is the outer part of the tooth. The bottom land is the lower part of the tooth or intermediate area between two teeth. The flank is the portion of the side of the tooth, which is the contact surface between two gear means when they engage. In use, said contact surface may be a contact line.

A tooth of the first gear means may be at least partially inserted into the tooth space of the mechanical transmission means. Further, a tooth of the second gear means may be at least partially inserted into the tooth space of said mechanical transmission means. The tooth space may include two side surfaces, e.g. a first side surface and a second side surface. The first side surface may include a flank portion of a first tooth of the mechanical transmission means. The second side surface may include a flank portion of a second tooth of the mechanical transmission means. The first and the second side surface may be opposed to each other. Preferably, the first tooth surface may be the first side surface. Also, the second tooth surface may be the second side surface.

Preferably, the second gear means may directly connect to the second side surface of the tooth space of the output shaft at the same time that the first gear means may directly connect to the first side surface of the tooth space of the output shaft.

Alternatively, it may also be possible that two teeth of the first gear means define therebetween a first gear tooth space, wherein two teeth of the second gear means define therebetween a second gear tooth space. Further, the first gear tooth space and the second gear tooth space define a common space when viewed from the axial position, e.g. viewed from the sensor driving means axis (AX1) position. The gear means of the mechanical transmission means, e.g. the output shaft, may comprise a tooth that may be at least partially inserted into the common space. The tooth of the gear means of the mechanical transmission means may include two side surfaces, e.g. a first tooth surface and a second tooth surface. The first and the second tooth surface may include a flank portion. Said first and second tooth surface may be opposed to each other. Preferably, the second gear means may directly connect to the second tooth surface at the same time that the first gear means may directly connect to the first tooth surface.

An advantage of the present sensor driving means may be that backlash between the sensor driving means and the output shaft may be removed. As a consequence, the accuracy of the detection system is improved.

Preferably, the sensor driving means may comprise an opening and a protrusion configured to be at least partially inserted into the opening. More preferably, the first part of the sensor driving means may comprise said opening. Further, the second part may comprise said protrusion configured to be at least partially inserted into the opening. In use, the opening may comprise a contact surface configured to produce a shear force when the protrusion abuts the contact surface. The shear force may be any force that is not parallel or coincident to the sensor driving means axis (AX1), more preferably, having at least a force component whose projection on a plane containing the sensor driving means axis (AX1) is perpendicular to the sensor driving means axis (AX1). The shear force may help backlash removal.

In other words, the biasing means may push the second part to the first part along the sensor driving means axis (AX1). The first part may have one or more openings, preferably, arranged on a bottom surface thereof. One or more protrusions of the second part may be thus inserted into the one or more openings. Each of the one or more protrusions may include a free end adapted for abutting the contact surface of the one or more openings. The contact surface may be arranged inclined with respect to the sensor driving means axis (AX1). Further, the contact surface may have different inclination than any other surface of the opening. Preferably, the contact surface may have different inclination than an opposite surface within the opening in relation to the sensor driving means axis (AX1). More preferably, the contact surface may be arranged inclined of between 10º to 80º with respect to the sensor driving means axis (AX1). It may be even more preferred that the contact surface may be arranged inclined of between 30º to 60º with respect to the sensor driving means axis (AX1). Further, the opening may be asymmetrical. When the protrusion abuts the contact surface it may cause an angular displacement between the first part and the second part. Preferably, it may cause:
- the first part to rotate on the sensor driving means axis (AX1) in a first direction until said first part directly connects to the first tooth surface of the gear means; and /or
- the second part to rotate on the sensor driving means axis (AX1) in a second direction until said second part directly connects to the second tooth surface of the gear means.

The first direction and the second direction may be different. Preferably, the second direction may be opposed to the first direction. More preferably, said first direction may be clockwise, while the second direction may be counter clockwise, or vice versa, the first direction may be counter clockwise and the second direction may be clockwise. In use, the first tooth surface of the gear means of the mechanical transmission means may be directly connected to the first part at the same time that the second tooth surface of the gear means of the mechanical transmission means may be directly connected to the second part so as to remove the play between the sensor driving means and the mechanical transmission means. Preferably, the first tooth surface of the gear means may be directly connected to the first gear means at the same time that the second tooth surface of the gear means may be directly connected to the second gear means. A tooth of the first gear means may include a first surface flank and a second surface flank, wherein a tooth of the second gear means may include a first surface flank and a second surface flank. More preferably, the first tooth surface of the gear means may be directly connected to the first surface flank of the first gear means at the same time that the second tooth surface of the gear means may be directly connected to the second surface flank of the second gear means. Thus, as explained, the purpose of the contact surface may be to produce a shear force when the free end of the protrusion of the second part abuts the contact surface. A shear force may have a component substantially perpendicular to the deformation of the biasing means. The biasing means may be deformed at least along the sensor driving means axis (AX1) or parallel thereto. Further, the sensor driving means axis (AX1) may be substantially perpendicular to the printed circuit board (PCB).

The sensor driving means may preferably comprise a housing comprising a housing flange inwardly arranged. It is preferred that the housing flange may extend substantially perpendicular to the sensor driving means axis (AX1).

It may be preferred that the biasing means may be further configured to push the first and the second part to the housing flange. Therefore, the housing flange may act as stopper.

Preferably, the first part of the sensor driving means may further comprise a first part flange particularly configured to abut against the housing flange. In this way, the housing flange may act as stopper of the first part flange. Therefore, a control distance, e.g. a constant distance, is achieved between the first end of the sensor driving means, e.g. the magnet, and the first sensor position.

Preferably, the housing may enclose at least a portion of the sensor driving means. More preferably, the housing may further enclose at least a portion of the mechanical transmission means.

It may be preferred that the first part of the sensor driving means may be substantially hollow or at least may comprise a passageway along the sensor driving means axis (AX1). The second part of the sensor driving means may further comprise a central portion which, in use, may be arranged in the passageway of the first part. The central portion may extend along the sensor driving means axis (AX1) or parallel thereto. Also, the central portion may be longer that the protrusion. Further, the second part may comprise two protrusions, wherein the central part may be arranged between said two protrusions.

Preferably, at least a portion of the sensor driving means may be arranged between the first sensor position and the rotor shaft in a plane containing the rotor shaft axis (AX3) and the sensor driving means axis (AX1). Further, the first end of sensor driving means may be arranged between the first sensor position and the first gear means. Also, the first end of the mechanical transmission means, e.g. the second sensor driving means, may be arranged between the second sensor position and the gear means of the mechanical transmission means.

According to an aspect of the present invention, a detection system for a mechanical transmission such as a mechanical transmission actuator, e.g. a gearbox actuator, may comprise:
- a sensor driving means configured to be moved, e.g. rotated;
- a printed circuit board (PCB); and
- a first sensor position coupled to the printed circuit board (PCB) and connected to the sensor driving means for sensing a position thereof.

The sensor driving means may include the same features as the sensor driving means disclosed in the present disclosure.

The first sensor position may preferably be connected to the sensor driving means for sensing a position of the sensor driving means. In this way, the detection system may be configured to determine the position of the mechanical transmission means.

It may be preferred that the detection system may further comprise a control unit (ECU) coupled to the printed circuit board (PCB). Thus, the control unit (ECU) may be configured to receive the sensed position of the sensor driving means for determining the position thereof.

The detection system may further comprise:
- a second sensor position coupled to the printed circuit board (PCB); and
- a mechanical transmission means.

The mechanical transmission means may include the same features as the mechanical transmission means disclosed above when explaining the connection of the sensor driving means. As stated, the mechanical transmission means may comprise the output shaft. Preferably, the mechanical transmission means may further comprise the rotor shaft. More preferably, the mechanical transmission means may further comprise the above-mentioned reduction gear. The mechanical transmission means may optionally be connected to the second sensor position. Thus, the mechanical transmission means may be referred to as a second sensor driving means when its position may be sensed by the second sensor position.

This is, the sensor driving means may be connected to the first sensor position and the mechanical transmission means, e.g. the second sensor driving means, may be connected to the second sensor position.

The second sensor position may preferably be connected to the mechanical transmission means for sensing a position thereof. Further, the control unit (ECU) may be further configured to receive the sensed position of the mechanical transmission means, e.g. the second sensor driving means, for determining the position thereof. It may thus be possible to determine the position of the rotor with respect to the stator bobbin structure, e.g. stator coils. In short, the invention provides a first sensing position for determining the position of the external shaft since it may be attached to the output shaft, and a second sensing position for determining the position of the rotor.

As stated above, the first and/or the second sensor position may comprise a non-contact sensor or a contact sensor. The sensor driving means and/or the rotor shaft may comprise a portion adapted for interacting to the first and/or the second sensor position. In use, said portion:
(i) may be at least partially arranged in the contact sensor; and/or
(ii) may be provided with a magnet arranged to face the non-contact sensor.

The non-contact sensor may comprise a Hall sensor. Further, the contact sensor may comprise a potentiometer. It should be noted however that other contact sensors may also be used. For example, resistive tracks in electrical contact with brushes may also be used. A reliable, simple and robust detection may be performed with such contact sensors.

The above-mentioned portion may be a first end. Therefore, the first end of the first part may be adapted for interacting, e.g. connecting, to the first sensor position. Thus, the first sensor position may not be necessarily to be part of the sensor driving means. As explained, the first sensor position may be a non-contact sensor such as a Hall sensor. Alternatively, the first sensor may be a contact sensor such as potentiometer, e.g. rotary potentiometers or linear potentiometers.

As for the Hall effect sensors, a magnet, e.g. an encoder magnet, may be provided. Preferably, the first end of the first part of the sensor driving means may comprise the magnet. Said magnet may be arranged to face the Hall effect sensor.

According to an aspect of the present invention, a motor vehicle is provided comprising a mechanical transmission such as a mechanical transmission actuator that, in turn, may comprise a detection system that may include a sensor driving means.

According to an aspect of the present invention, a shifting method for a vehicle is further provided comprising the steps of:
- receiving, from an automatic transmission, an operation request;
- generating, by a control unit ECU, a shift signal upon the operation request;
- actuating a mechanical transmission actuator, e.g. a vehicle gearbox actuator, based on the shift signal;
- driving a mechanical transmission by the mechanical transmission actuator;
- adjusting, by the mechanical transmission, the gear ratio between drive wheels and an engine of a vehicle; and
- transferring a power produced by the engine to the drive wheels of the vehicle.

According to an aspect of the present invention, a method for actuating a mechanical transmission actuator may comprise the steps of:
- applying electric current to a motor to generate power for rotating a rotor shaft upon receiving a shift signal;
- moving a reduction gear connected to the rotor shaft;
- driving an output shaft connected to the reduction gear;
- transmitting mechanical power to an external shaft connected to the output shaft;
- sensing a position of the output shaft and, preferably, a position of the rotor shaft;
- preferably, determining the position of the rotor shaft in real time; and
- determining, by a detection system, the position of the output shaft in real time.

Further, the step of determining the position of the output shaft may comprise:
- causing a sensor driving means to move as the output shaft rotates; and
- connecting a portion of the sensor driving means to a first sensor position,
wherein the sensor driving means or at least a portion thereof rotates about a sensor driving means axis (AX1) being arranged substantially parallel to an output shaft axis (AX2) which is the axis of rotation of the output shaft, and wherein the first sensor position is coupled to a printed circuit board (PCB) being arranged substantially perpendicular to the sensor driving means axis (AX1).

In examples, the method for actuating the mechanical transmission actuator may be implemented according to the above-mentioned mechanical transmission actuator.

According to an aspect of the present invention, a method of assembly a detection system may comprise the steps of:
- providing a printed circuit board (PCB);
- coupling a first sensor position to the printed circuit board (PCB);
- preferably, coupling a second sensor position to the printed circuit board (PCB);
- providing a sensor driving means comprising a first part, a second part, an opening, and a protrusion;
- providing a mechanical transmission means comprising a gear means, wherein the gear means comprises a first tooth surface and a second tooth surface;
- connecting the sensor driving means to the gear means;
- inserting the protrusion into the opening such that the protrusion abuts a contact surface of the opening for causing an angular displacement between the first part and the second part;
- connecting directly the first part of the sensor driving means to the first tooth surface of the gear means;
- connecting directly the second part of the sensor driving means to the second tooth surface of the gear means; and
- preferably, pushing by a biasing means, the first part and second part of the sensor driving means to each other.

### BRIEF DESCRIPTION OF THE DRAWINGS

Non-limiting examples of the present disclosure will be described in the following, with reference to the appended figures, in which:
Figure 1 is a cross-section view that shows an example of a gearbox actuator.
Figure 2 is a cross-sectional view of an example of a detection system for a gearbox actuator.
Figure 3 is an exploded view of an example of a sensor driving means for a detection system.
Figure 4 is a cross-sectional view of an example of the sensor driving means that shows the engagement of the sensor driving means and an output shaft.
Figures 5a is a detail view of figure 4. It shows a first part of the sensor driving means comprising a first gear means engaging the output shaft, wherein a second part of the sensor driving means comprises a second gear means engaging another tooth surface of the output shaft.
Figure 5b is a detail view of an example of the sensor driving means showing the first gear means directly connected to a first tooth surface of the output shaft.
Figure 5c is a detail view of an example of the sensor driving means showing the second gear means directly connected to a second tooth surface of the output shaft.
Figure 6 is a detail view that shows a sensor driving means provided with a protrusion and an opening, whin the protrusion is inserted to the opening for producing a shear force.
Figure 7 is a perspective view that shows an example of a reduction gear directly connected to a rotor shaft and an output shaft.

The figures refer to example implementations and are only be used as an aid for understanding the claimed subject matter, not for limiting it in any sense.

### DETAILED DESCRIPTION OF EXAMPLES

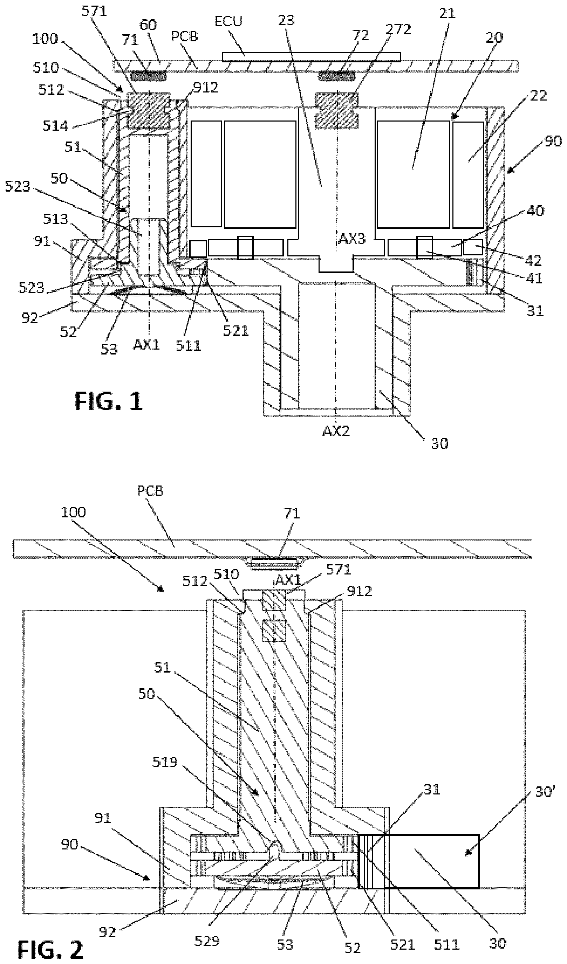

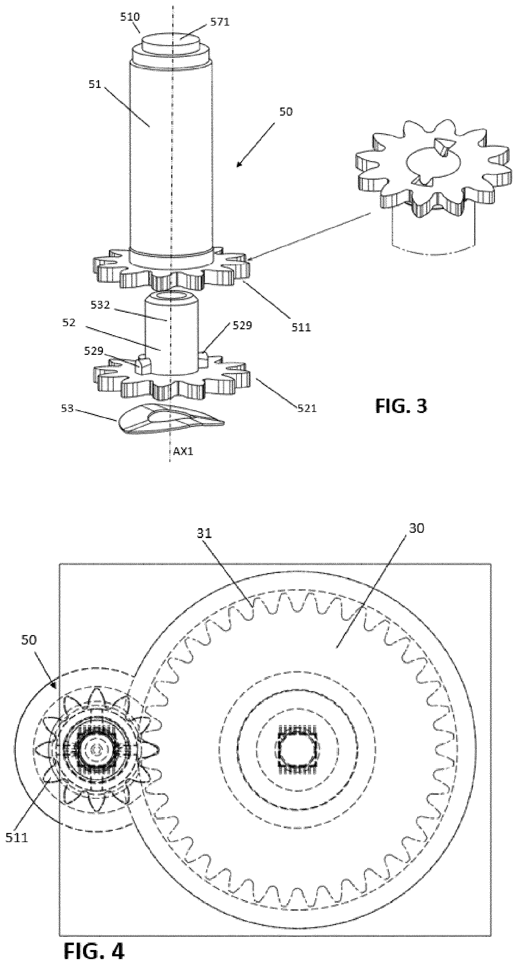

With reference for illustrative purposes to the example of figure 1, in a first aspect of the present disclosure, a gearbox actuator for providing torque to a vehicle transmission such as a gearbox (not shown) is disclosed. Further, with reference for illustrative purposes to the example of figure 2, according to an aspect of the present disclosure, a detection system 100 for determining a position of at least a part of a gearbox actuator is provided. Also, in accordance with a possible aspect, a sensor driving means 50 for a detection system 100 is provided as shown in figure 3.

Figure 1 shows a gearbox actuator comprising a motor 20, a rotor shaft 23, a reduction gear 40, and an output shaft 30.

The motor 20 is configured to produce a generated torque using electric current applied thereto. In particular, the motor 20 is an electric motor such as for example a DC, BLDC or SRM motor for transferring torque to the gearbox (not shown) through the output shaft 30 that will be described in detail below. The electric motor 20 is thus configured to transform electric energy into motion when a request by a user is remotely sent by an electronic gearshift device (eShifter) such as a shift-by-wire device (not shown) to the gearbox actuator (not shown).

The motor 20 comprises a rotor 21 and a stator 22. The stator 22 is a stationary part in the motor in or about which the rotor 21 revolves. The stator 22 is provided with a stator bobbin structure.

The rotor shaft 23 is driven in rotation by the electric motor 20. This is, the rotor shaft 23 is moved by the generated torque of the motor. In examples, the rotor shaft 23 may be part of the motor 20.

The reduction gear 40 is configured to receive the generated torque of the motor and convert it so as to increase torque. It further transmits the converted torque, e.g. increased torque, to the output shaft 30. In other words, the reduction gear 40 acts as a speed reducer. It is used to reduce the speed of an input, e.g. the rotor shaft, from the motor, while also multiplying the torque the input creates. For this, the output shaft 30 rotates more slowly than the rotor shaft 23.

The output shaft 30 is arranged to mechanically connect to the reduction gear 40. Further, the output shaft 30 is arranged to connect to an external shaft (not shown). In examples, the external shaft (not shown) is the gearbox shaft. Said gearbox shaft is part of the gearbox, not necessarily being part of the present gearbox actuator. The output shaft 30 is configured to transmit torque, e.g. the generated torque, from the motor 20 to the gearbox shaft (not shown). In particular, the output shaft 30 is configured to transmit the converted torque from the rotor shaft 23 to the external gearbox shaft (not shown). More in particular, the output shaft 30 is configured to transmit the converted torque from the reduction gear 40 to the external gearbox shaft (not shown). Further, the rotor shaft 23 is a solid piece shaft according to the shown example. This is, the rotor shaft 23 does not include any empty space, e.g. is not hollow. It renders a more compact gearbox actuator.

Figure 1 shows the gearbox actuator further comprising a detection system 100. The detection system 100 comprises a sensor driving means 50, a printed circuit board PCB, and a first sensor position 71 coupled to the printed circuit board PCB and connected to the sensor driving means 50 for sensing a position of said sensor driving means 50.

As shown in Figure 1, at least a portion of the rotor 21 is arranged between the sensor driving means 50 and the rotor shaft 23. The sensor driving means 50 defines a sensor driving means axis AX1. The sensor driving means 50 is configured to rotate about the axis AX1. The output shaft 30 defines an output shaft axis AX2. The output shaft 30 is configured to rotate about the axis AX2. In use, the sensor driving means axis AX1 and the output shaft axis AX2 are misaligned to each other. This is, the axis AX1 and AX2 are not aligned to each other. In particular, the sensor driving means axis AX1 and the output shaft axis AX2 are arranged substantially parallel to each other. Further, the rotor shaft 23 defines a rotor shaft axis AX3, wherein the rotor shaft axis AX3 and the output shaft axis AX2 are aligned to each other. The rotor shaft 23 is configured to rotate about the axis AX3.

The sensor driving means 50 comprises a gear means 511, 521 adapted to cause a rotation of the sensor driving means 50 about the sensor driving means axis AX1 as the output shaft 30 rotates about the output shaft axis AX2. For this, the output shaft 30 further comprises a gear means 31 adapted for moving at least a part of the detection system 100. In particular, the gear means 31 of the output shaft is adapted for rotating the sensor driving means 50 about the sensor driving means axis AX1. Further, the sensor driving means 50 comprises a first end 510 adapted for interacting to the first sensor position 71.

In this way, the motor 20 causes the rotation of the rotor shaft 23, the rotor shaft 23 causes the rotation of and transmits torque to the reduction gear 40, the reduction gear 40 causes the rotation of and transmits torque to the output shaft 30, the output shaft 30 causes the rotation of and transmits torque to the external actuator shaft (not shown) and also causes the movement, e.g. rotation, of the sensor driving means 50 which comprises the first end 510 adapted for interacting to the first sensor position 71. As stated above, the first sensor position 71 is attached to the printed circuit board PCB. The first sensor position 71 and the first end 510 of the sensor driving means 50 are connected to each other for sensing a position of the sensor driving means 50. The position of the output shaft 30 may be thus determined without providing any passageway through the rotor shaft 23.

In particular, the first end 510 is arranged between the first sensor position 71 and the second part along the sensor driving means axis AX1.

As shown in figure 1, the detection system 100 further comprises a second sensor position 72 coupled to the printed circuit board PCB and connected to the rotor shaft 23 for sensing a position of the rotor shaft 23. This is, the printed circuit board PCB is a single electronics support 60 comprising both the first and the second sensor position 71, 72.

A control unit ECU is further provided, for example, within a housing 90 of the gearbox actuator. In particular, the control unit ECU is part of or connected to the detection system 100. More in particular, the control unit ECU is arranged within the housing 90 of the detection system 100. Even more in particular, the control unit ECU is coupled to the printed circuit board PCB.

Thus, as shown in figure 1, the printed circuit board PCB comprises the first sensor position 71, the second sensor position 72 and the control unit ECU. The ECU is configured to receive information on a rotational position of the rotor shaft 23 from the second sensor position 72 and on a rotational position of the sensor driving means 50 from the first sensor position 71. Thus, the position of the output shaft 30 and the rotor 21 may be determined and/or processed, by the control unit ECU, without providing any passageway through the rotor shaft 23.

As shown, at least a portion of the sensor driving means 50 is arranged between the first sensor position 71 and the rotor shaft 23 in a plane containing the rotor shaft axis AX3 and the sensor driving means axis AX1. Further, the first end 510 of sensor driving means is arranged between the first sensor position 71 and the gear means 511, 521 of the sensor driving means 50. Also, the first end of the rotor shaft 23 is arranged between the second sensor position 72 and the gear means 31 of the output shaft.

Figure 2 shows the present detection system 100 for determining at least a position of a part of a mechanical transmission, the mechanical transmission being the present mechanical transmission actuator such as a gearbox actuator for a vehicle. The detection system 100 comprises the printed circuit board PCB provided with the first sensor position 71 and the control unit ECU attached thereto. The detection system 100 further comprises the sensor driving means 50, referred also to the first sensor driving means, and a housing 90 which at least partially encloses said first sensor driving means 50.

As shown, the first sensor driving means 50 comprises two parts: a first part 51 including a first end 510 configured to connect to the first sensor position 71, and a second part 52. Both parts 51, 52 are connected to a mechanical transmission means 30'. Said mechanical transmission means 30' may be referred to as a second sensor driving means when connected to the second sensor position 72. In examples, the mechanical transmission means 30' comprises the outer shaft 30. It may also comprise the reduction gear 40 and the rotor shaft 23.

A shown in figure 2, the housing 90 comprises a first housing part 91 and a second housing part 92 attached to each other, in use, defining an interior space therein. The housing 90 may act as a support bracket. Further, it is possible the housing 90 includes one or more apertures as required. The housing 90, in particular, the first housing part 91, comprises a housing flange 912 that projects substantially perpendicular to the sensor driving means axis AX1 and inwardly arranged thereto. Also, the first part 51 of the sensor driving means comprises a first part flange 512 particularly configured to abut against the housing flange 912.

Figure 2 shows the detection system 100 further comprises a biasing means 53 which is configured to push the first sensor driving means 50 to the housing flange 912. In particular, the biasing means 53 is arranged between the first sensor driving means 50 and the housing 90 along the sensor driving means axis AX1 direction. More in particular, the biasing means 53 is arranged between the second part 52 of the first driving means 50 and the second part 92 of the housing 90. Further, the second part 52 of the first driving means 50 is arranged between the first part 51 and the biasing means 53. Thus, the biasing means 53 exerts a force to a bottom side of the second part 52 along the sensor driving means axis AX1 direction. In this way, the housing flange 912 acts as stopper of the first part flange 512.

As shown in FIGs. 2 and 3, the first driving means 50 comprises a first gear means 511 and a second gear means 521 both connected to the mechanical transmission means 30', e.g. the second sensor driving means. As stated above, in examples, the mechanical transmission means 30' comprises the output shaft 30.

The mechanical transmission means 30', in particular, the output shaft 30, comprises the gear means 31. In this way, the mechanical transmission means 30' causes the rotation of the first driving means 50 about the first driving means axis AX1 through the gear means 31, the first gear means 511 and the second gear means 521.

The first part 51 is substantially hollow or at least comprises a passageway along the sensor driving means axis AX1. As shown, the passageway is located on a bottom side of the first part. Figure 3 shows the second part 52 further comprises a central portion 532 which, in use, is arranged in the passageway of the first part 51. The central portion 532 extends along the sensor driving means axis AX1. It allows an angular displacement on the sensor driving means axis AX1 between the first and the second part 51, 52. As shown, the central portion 532 is longer that the protrusions 529. Further, the central portion 532 is arranged between two protrusions 529.

Figure 4 shows that the first gear means 511, the second gear means 521 and the gear means 31 comprise a plurality of teeth arranged on the perimeter surface of the first part 51, the second part 52 and the output shaft 30 respectively. In particular, the first gear means 511 extends around substantially the entire perimeter of a first portion of the first sensor driving means 50, e.g. a portion of the first part 51. Further, the second gear means 521 extends around substantially the entire perimeter of a second portion of the first sensor driving means 50, e.g. a portion of the second part 52. The gear means 31 of the output shaft further extends around substantially the entire perimeter of a portion of said output shaft 30.

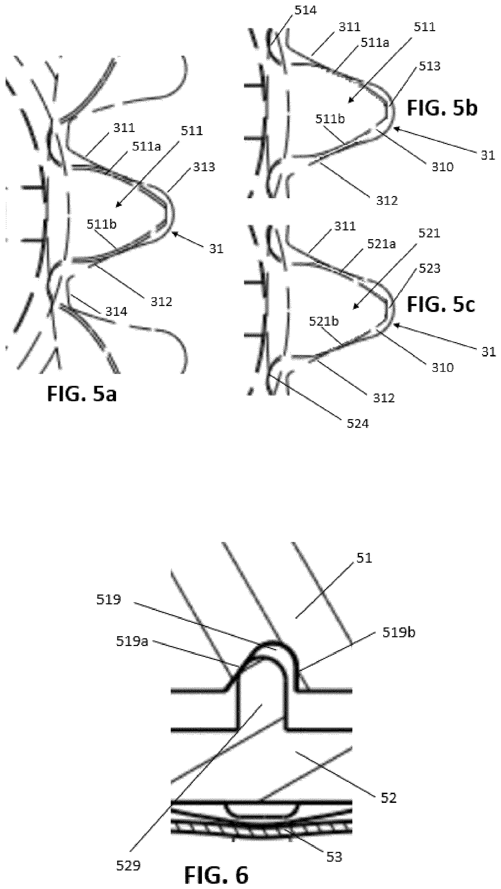

In use, FIG.5a shows that the first gear means 511 abuts a first tooth surface of the gear means 31 of the output shaft 30. Further, the second gear means 521 abuts a second tooth surface of the gear means 31.

Each gear tooth of the plurality of teeth includes a top land, a bottom land and a flank. The top land is an outer part of the tooth. The bottom land is a lower part of the tooth or an intermediate area between two teeth. The flank is a portion of the side of the tooth. This is, the flank is the portion that connects the top and bottom land.

As shown in FIG.5b, the first gear means 511 includes a top land 513, a bottom land 514, a first surface flank 511a, and a second surface flank 511b. FIG.5c shows the second gear means 521 that includes a top land 529, a bottom land 524, a first surface flank 521a, and a second surface flank 521b.

FIG.5b shows a tooth of the first gear means 511 is at least partially inserted into a tooth space 310 of the gear means 31 of the output shaft 30. The size of the tooth space 310 is slightly greater than the size of the tooth of the first gear means 511 inserted thereof. Further, FIG.5c shows a tooth of the second gear means 521 that is at least partially inserted into the tooth space 310 of the gear means 31. The size of the tooth space 310 is slightly greater than the size of the tooth of the second gear means 521 inserted thereof. The tooth space 310 includes a first side surface 311 and a second side surface 312. The first side surface 311 includes a flank portion of a first tooth of the gear means 31. The second side surface 312 includes a flank portion of a second tooth of the gear means 31. The first and the second side surface 311, 312 are opposed to each other. As shown in FIG.5b, the first tooth surface is the first side surface 311. Also, as shown in FIG.5c, the second tooth surface is the second side surface 312.

In use, as shown in FIG.5b, the first surface flank 511a of the first gear means 511 is the contact surface between the first gear means 511 and the gear means 31 when they engage. It should be noted that the second surface flank 511b is not in direct contact to the second side surface 312 of the gear means 31 when the first surface flank 511a is in direct contact to the first side surface 311. Further, as shown in FIG.5c, the second surface flank 521b of the second gear means 521 is the contact surface between the second gear means 521 and the gear means 31 when they engage. It should be noted that the first surface flank 521a is not in direct contact to the first side surface 311 when the second surface flank 521b is in direct contact to the second side surface 312. In other words, the second gear means 521 is directly connected to the second side surface 312 of the tooth space 310 of the gear means 31 at the same time that the first gear means 511 is directly connected to the first side surface 311 of the tooth space 310 of the gear means 31. It allows to remove the backlash between the sensor driving means 50 and the output shaft 30. As a consequence, the accuracy of the detection system is advantageously improved.

Alternatively, according to an example not shown, it may also be possible that two teeth of the first gear means of the sensor driving means define a first gear tooth space, wherein two teeth of the second gear means of the sensor driving means define a second gear tooth space. Further, the first gear tooth space and the second gear tooth space define a common space when viewed from the axial position, e.g. the sensor driving means axis (AX1) position. The gear means of the output shaft comprises a tooth that may be at least partially inserted into the common space. The tooth of the gear means of the output shaft includes two side surfaces, e.g. a first side surface and a second side surface. The first and the second side surface includes a flank portion. In particular, the second gear means directly connects to the second side surface of the tooth of the output shaft at the same time that the first gear means directly connects to the first side surface of the tooth of the output shaft.

Figure 6 shows the sensor driving means 50 provided at least with the above-mentioned two parts: the first part 51 and the second part 52. The first part 51 comprises an opening 519 arranged on a bottom surface thereof. The second part 52 comprises a protrusion 529 configured to be inserted into the opening 519 (see also FIG.3). It is possible the first part comprises the protrusion on a bottom surface thereof and the second part comprises the opening arranged such that, in use, the protrusion is inserted into the opening (not shown). In particular, the opening 519 comprises a contact surface 519a. The protrusion 529 at least extends along the sensor driving means axis AX1. Furthermore, the protrusion 529 includes a free end adapted for abutting a contact surface 519a of the opening. In use, the contact surface 519a is configured to produce a shear force when the protrusion 529 directly contacts the contact surface 519a. In the example of FIG.6, the shear force has at least a component that is perpendicular to the sensor driving means axis AX1. This is, the shear force causes, as shown in FIG. 5a, 5b, 5c, the first gear means 511 directly contacting the first side surface 311 of the tooth space 310 of the gear means 31 of the output shaft 30, and the second gear means 521 directly contacts the second side surface 312 of the tooth space 310. Thus, the shear force helps backlash removal between the sensor driving means 50 and the output shaft 30.

In other words, when the protrusion 529 abuts the contact surface 519a it causes an angular displacement between the first part 51 and the second part 52 with respect to the sensor driving means axis AX1. In use, the first part 51 slightly rotates on the sensor driving means axis AX1 in a first direction until said first part 51 directly connects to the first side surface 311 of the gear means. Further, the second part 52 slightly rotates on the sensor driving means axis AX1 in a second direction when the protrusion 529 abuts the contact surface 519a until said second part 52 directly connects to the second side surface 312 of the gear means. Said first direction may be clockwise, while the second direction may be counter clockwise, or vice versa. In particular, when the protrusion 529 abuts the contact surface 519a, the first gear means 511 directly connects to the first side surface 311 of the gear means 31 of the output shaft 30 while the second gear means 521 directly connects to the second side surface 312 of the gear means 31 of the output shaft 30 at the same time so as to remove the play between the sensor driving means 50 and the output shaft 30. More in particular, the first surface flank 511a directly connects to the first side surface 311 at the same time that the second surface flank 521b directly connects to the second side surface 312.

FIG. 6 shows the contact surface 519a is arranged inclined with respect to the sensor driving means axis AX1. Further, the contact surface 519a has a different inclination than any other surface of the opening 519. In particular, the contact surface 519a has different inclination than the opposite surface 519b within the opening. More in particular, the contact surface 519a is arranged inclined of between 10º to 80º with respect to the sensor driving means axis AX1, particularly, being inclined of between 30º to 60º. In examples, the opening 519 is asymmetrical. A purpose of the contact surface 519a is to produce the shear force when the free end of the protrusion 529 of the second part 52 directly contacts the contact surface 519a.

As explained, the sensor driving means axis AX1 is substantially parallel to the output shaft axis AX2. The output shaft axis AX2 and the rotor shaft axis AX3 are aligned to each other. The protrusion 529 at least partially extends substantially parallel to sensor driving means axis AX1. The biasing means is deformed at least along the sensor driving means axis AX1 or parallel thereto. Further, the sensor driving means axis AX1 is substantially perpendicular to the printed circuit board PCB. The printed circuit board PCB is at least partially located within the housing 90 and arranged substantially perpendicular to axes AX1, AX2 and AX3.

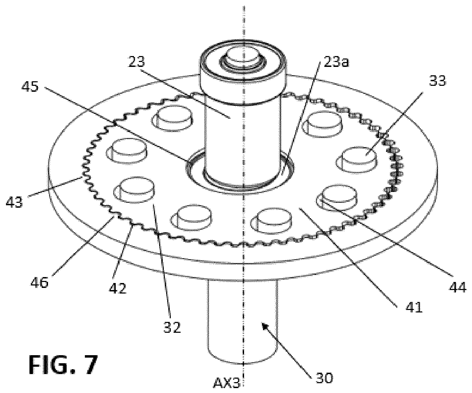

Figure 7 shows the mechanical connection between the reduction gear 40, the rotor shaft 23 and the output shaft 30. The rotor shaft 23 comprises a rotor shaft plate 23a extending perpendicularly outward. The rotor shaft plate 23a is provided with an eccentricity with respect to the rotor shaft axis AX3. This is, the rotor shaft axis AX3 does not pass through the geometric center of the rotor shaft plate 23a.

The reduction gear 40 further comprises a cycloidal disc 41. In particular, the reduction gear 40 further comprises a bearing means 45 and a plurality of ring elements 46. The bearing means 45 is adapted for allowing the rotor shaft 23 to rotate about the rotor shaft axis AX3. The bearing means 45 is also adapted for allowing the rotor shaft plate 23a to move as required. A first surface, e.g. inner surface, of the bearing means 45 is in direct contact to an edge surface of the rotor shaft plate 23a. A second surface, e.g. outer surface, of the bearing means 45 is in direct contact to the cycloidal disc 41. The cycloidal disc 41 includes, in turn, a plurality of teeth 42 at the perimeter edge thereof defining thus a plurality of cycloidal disc tooth spaces 43. Said plurality of teeth 42 extend substantially perpendicular to the rotor shaft axis AX3. The plurality of cycloidal disc tooth spaces 43 are adapted for receiving ring elements 46. In particular, as shown in FIG.7, the ring elements 46 are fixed (do not moved) with respect to the rotor shaft axis AX3. The ring elements 46 may be ring pins, balls, rollers or the like. In use, the ring elements 46 are at least partially arranged in the cycloidal disc tooth spaces 43. It is important the number of ring elements 46 is greater than the number of cycloidal disc tooth spaces 43.

As shown in FIG.7, the cycloidal disc 41 comprises a plurality of apertures 44. The output shaft 30 comprises a plate 32 which is provided with a plurality of rods 33 extending along the direction of the rotor shaft axis AX3 or parallel thereto. The rods 33 are adapted for being at least partially arranged within the apertures 44. As the rotor shaft 23 rotates, the cycloidal disc 41 rotates which causes rotation of and torque transmittal to the output shaft 30.

It is envisaged that the rotor shaft 23 defines a longitudinal axis AX3 that is an axial symmetry of the rotor shaft 23 (excluding the rotor shaft plate 23a). Further, the output shaft 30 defines a longitudinal axis AX2 that is an axial symmetry of at least a portion of the output shaft 30.

A shifting method for a vehicle is further provided comprising the steps of:
- receiving, from a shift-by-wire transmission, an operation request in response to a user's selection;
- generating, by a control unit ECU, a shift signal upon the operation request;
- actuating a mechanical transmission actuator, e.g. a vehicle gearbox actuator, based on the shift signal;
- driving a mechanical transmission by the mechanical transmission actuator;
- adjusting, by the mechanical transmission, the gear ratio between the drive wheels and the engine of a vehicle; and
- transferring a power produced by the engine to the drive wheels of the vehicle.

A method for actuating the mechanical transmission actuator comprises the steps of:
- applying electric current to a motor 20 to generate power for rotating a rotor shaft 23 upon receiving a shift signal;
- moving a reduction gear 40 connected to the rotor shaft 23;
- rotating an output shaft 30 connected to the reduction gear 40;
- transmitting mechanical power to an external shaft connected to the output shaft 30;
- transmitting information about the rotational position of the rotor shaft 23 and the output shaft 30 to a control unit ECU;
- determining a rotational position of the rotor shaft 23 in real time;
- determining, by a detection system 100, a rotation position of the output shaft 30 in real time; and
- stopping, by the control unit ECU, driving of the motor 20 when receiving an operation request in response to a user's selection,

wherein determining the rotation position of the output shaft 30 comprises:
   - causing a sensor driving means 50 to rotate as the output shaft 30 rotates; and
   - connecting a first end 510 of the sensor driving means 50 to a first sensor position 71,
wherein the sensor driving means 50 rotates about a sensor driving means axis AX1 being substantially parallel to an output shaft axis AX2 which is the axis of rotation of the output shaft 30, and
wherein the first sensor position 71 is coupled to a printed circuit board PCB being arranged substantially perpendicular to the sensor driving means axis AX1.

A method of assembly the detection system 100 comprises the steps of:
- providing a printed circuit board PCB;
- coupling a first sensor position 71 to the printed circuit board PCB;
- coupling a second sensor position 72 to the printed circuit board PCB;
- providing a sensor driving means 50 comprising a first part 51, a second part 51, an opening 519, and a protrusion 529;
- providing an output shaft 30 comprising a gear means 31, wherein the gear means 31 comprises a first tooth surface and a second tooth surface;
- connecting the sensor driving means 50 to the gear means 31 of the output shaft;
- inserting the protrusion 529 into the opening 519 such that the protrusion 529 abuts a contact surface 519a of the opening for causing an angular displacement between the first part 51 and the second part 52;
- connecting directly the first part 51 to the first tooth surface of the gear means 31;
- connecting directly the second part 52 to the second tooth surface of the gear means 31; and
- pushing, by a biasing means, the first part 51 and second part 52 to each other.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A mechanical transmission actuator for a vehicle comprising:
- a motor (20) configured to produce a generated torque using electric current applied thereto;
- a rotor shaft (23) moved by the generated torque;
- an output shaft (30) configured to connect to an external shaft;
- a reduction gear (40) configured to receive the generated torque of the motor (20), convert the generated torque into a converted torque, and transmit the converted torque to the output shaft (30); and
- a detection system (100), wherein the output shaft (30) is connected to the detection system (100),
wherein the output shaft (30) is configured to transmit the converted torque from the reduction gear (40) to the external shaft, and
wherein the detection system (100) is configured to determine a position of the output shaft (30).

2. The mechanical transmission actuator of claim 1, wherein the detection system (100) comprises:
• a sensor driving means (50);
• a printed circuit board (PCB); and
• a first sensor position (71) coupled to the printed circuit board (PCB) and connected to the sensor driving means (50) for sensing a position of the sensor driving means (50).

3. The mechanical transmission actuator of claim 2, wherein the detection system (100) further comprises a second sensor position (72) coupled to the printed circuit board (PCB) and connected to the rotor shaft (23) for sensing a position of the rotor shaft (23) such that the detection system (100) is further configured to determine the position of the rotor shaft (23).

4. The mechanical transmission actuator of any of the claims 2-3, wherein the motor (20) comprises a rotor (21) that includes at least a portion arranged between the sensor driving means (50) and the rotor shaft (23).

5. The mechanical transmission actuator of any of the claims 2-4, wherein the sensor driving means (50) defines a sensor driving means axis (AX1) being an axis of rotation of the sensor driving means or at least a portion thereof, wherein the output shaft (30) defines an output shaft axis (AX2) being an axis of rotation of the output shaft or at least a portion thereof such that, in use, the sensor driving means axis (AX1) and the output shaft axis (AX2) are misaligned to each other.

6. The mechanical transmission actuator of claims 5, wherein the sensor driving means axis (AX1) and the output shaft axis (AX2) are arranged substantially parallel to each other.

7. The mechanical transmission actuator of any of the claims 5-6, wherein the rotor shaft (23) defines a rotor shaft axis (AX3) being an axis of rotation of the rotor shaft, wherein the rotor shaft axis (AX3) and the output shaft axis (AX2) are aligned to each other.

8. The mechanical transmission actuator of any of the claims 2-7, wherein the printed circuit board (PCB) is arranged substantially perpendicular to the sensor driving means axis (AX1).

9. The mechanical transmission actuator of any of the claims 3-8, wherein the printed circuit board (PCB) comprises a control unit (ECU) configured to receive information on a rotational position of the sensor driving means (50) from the first sensor position (71) for determining a rotational position of the output shaft (30) and, preferably, the control unit (ECU) is further configured to receive information on a rotational position of the rotor shaft (23) from the second sensor position (72) for determining the rotational position of the rotor shaft (23).

10. A sensor driving means (50) comprising:
- a first part (51) comprising a first gear means (511), and a portion (510) adapted for interacting to a first sensor position (71), wherein the first gear means (511) is configured to connect to a mechanical transmission means (30');
- a second part (52) comprising a second gear means (521) configured to connect to the mechanical transmission means (30'); and
- a biasing means (53) configured to push the second part (52) and the first part (51) together,
wherein, in use, the first gear means (511) abuts a first tooth surface of the mechanical transmission means (30) and the second gear means (521) abuts a second tooth surface of the mechanical transmission means (30).

11. The sensor driving means (50) of claim 10, wherein it further comprises an opening (519) and a protrusion (529) configured to be at least partially inserted into the opening (519),
wherein, the first part (51) and the second part (52) are directly connected to each other such that, in use, the opening (519) comprises a contact surface configured to produce a shear force when the protrusion (529) abuts the contact surface.

12. The sensor driving means (50) of any of the claims 10-11, wherein it further comprises a housing (90) comprising a housing flange (912) inwardly arranged, wherein the biasing means (53) is further configured to push the first and the second part (51, 52) to the housing flange (912).

13. A detection system (100) for a mechanical transmission comprising:
- the sensor driving means (50) of any of the claims 10-12;
- a printed circuit board (PCB); and
- a first sensor position (71) coupled to the printed circuit board (PCB);
wherein the first sensor position (71) is connected to the sensor driving means (50) for sensing a position of the sensor driving means (50).

14. The detection system (100) of claim 13, wherein it further comprises:
- a control unit (ECU) coupled to the printed circuit board (PCB);
- a second sensor position (72) coupled to the printed circuit board (PCB); and
- a mechanical transmission means (30');
wherein the control unit (ECU) is configured to receive the sensed position of the sensor driving means (50) for determining the position thereof;
wherein the second sensor position (72) is connected to the mechanical transmission means (30') for sensing a position of the mechanical transmission means (30'); and
wherein the control unit (ECU) is further configured to receive the sensed position of the mechanical transmission means (30') for determining the position thereof.

15. The detection system (100) of claim 14, wherein the first sensor position (71) and/or the second sensor position (72) is a Hall sensor or a potentiometer, wherein the sensor driving means (50) and/or the rotor shaft (23) comprises a portion adapted for interacting to the first and/or the second sensor position (71, 72), wherein, in use, said portion:
(i) is at least partially arranged in the first and/or the second sensor position (71, 72); and/or
(ii) comprises a magnet arranged to face the Hall sensor.
